# EUROPÄISCHE PATENTANMELDUNG

(11) **EP 3 402 039 A1**
(43) Veröffentlichungstag der Anmeldung: **14.11.2018**
(21) Anmeldenummer: 17170449.7
(22) Anmeldetag: 10.05.2017
(51) Int. Cl.: H02K 1/04, H01F 3/02, H01F 27/245, H01F 27/32, H02K 3/30, H01F 41/02

(54) **ISOLATION EINER ELEKTRISCHEN MASCHINE**

(71) Anmelder: Siemens Aktiengesellschaft, 80333 München (DE)
(72) Erfinder: Bittner, Roland, 91522 Ansbach (DE); Hösle, Markus, 91058 Erlangen (DE)

(57) **Zusammenfassung**

Die Erfindung betrifft eine elektrische Maschine (10) mit:
- einem Ständer (12), und
- und einem Läufer (14),
- wobei der Ständer (12) und/oder der Läufer (14) ein Blechpaket (16,18) aus einem Stapel von mittels eines ersten elektrischen Isolationsmaterials gegenüber einander elektrisch isolierten, magnetisierbaren Blechen (20) und eine Wicklung (22) mit wenigstens einem Wicklungsleiter (24) aufweist, der in wenigstens einer Nut (26) des Blechpakets (16, 18) mittels eines zweiten elektrischen Isolationsmaterials (28) gegenüber dem Blechpaket (16,18) elektrisch isoliert angeordnet ist. Der Erfindung liegt die Aufgabe zugrunde, eine verbesserte elektrische Isolation für eine elektrische Maschine bereitzustellen. Erfindungsgemäß ist das erste und/oder das zweite elektrische Isolationsmaterial (28) zumindest teilweise durch ein Hybridfunktionsmaterial gebildet.

## Beschreibung

Die Erfindung betrifft eine elektrische Maschine mit einem Ständer und einem Läufer, wobei der Ständer und/oder der Läufer ein Blechpaket aus einem Stapel von mittels eines ersten elektrischen Isolationsmaterials gegenüber einander elektrisch isolierten, magnetisierbaren Blechen und eine Wicklung mit wenigstens einem Wicklungsleiter aufweist, der in wenigstens einer Nut des Blechpakets mittels eines zweiten elektrischen Isolationsmaterials gegenüber dem Blechpaket elektrisch isoliert angeordnet ist.

Gattungsgemäße elektrische Maschinen, Ständer von elektrischen Maschinen sowie Läufer von elektrischen Maschinen sind dem Grunde nach im Stand der Technik umfänglich bekannt, so dass es eines gesonderten druckschriftlichen Nachweises hierfür nicht bedarf. Bei einer elektrischen Maschine, insbesondere einer rotierenden elektrischen Maschine, ist dem Grunde nach ein Ständer als Stator vorgesehen, der in der Regel eine im Wesentlichen kreisförmige Öffnung zur Aufnahme eines als Rotor ausgebildeten Läufers bereitstellt. In der Öffnung ist der Läufer drehbar gelagert angeordnet, wobei zwischen dem Läufer und dem Ständer ein Luftspalt ausgebildet ist.

Eine rotierende elektrische Maschine ist eine Vorrichtung, die elektrische Energie in mechanische Energie, insbesondere Bewegungsenergie in einem Motorbetrieb und/oder mechanische Energie in eine elektrische Energie in einem Generatorbetrieb umformt. Bei der Bewegung handelt es sich in der Regel um eine Drehbewegung, die vom Läufer ausgeführt wird. Der Ständer ist im Unterschied zum Läufer drehfest angeordnet, d.h., bei der Drehbewegung handelt es sich um eine Drehbewegung des Läufers gegenüber dem Ständer.

Der Ständer und der Läufer sind mittels eines magnetischen Flusses verkettet, wodurch im Motorbetrieb die Kraftwirkung, nämlich das Drehmoment erzeugt wird, die den Läufer gegenüber dem Ständer drehend antreibt, und im Generatorbetrieb dem Läufer zugeführte mechanische Energie in Form einer Rotation bzw. eines Drehmoments in eine elektrische Energie umwandelt. Zu diesem Zweck weisen der Ständer und/oder der Läufer jeweils eine von einem elektrischen Strom durchflossene Wicklung auf. Im Ständer oder im Läufer kann die Wicklung auch durch einen Permanentmagneten gebildet oder durch einen solchen ergänzt sein.

Rotierende elektrische Maschinen der gattungsgemäßen Art sind beispielsweise Drehfeldmaschinen, die an ein mehrphasiges, insbesondere dreiphasiges elektrisches Netz angeschlossen sind, wie beispielsweise Asynchronmaschinen, Synchronmaschinen, Synchronmaschinen mit einem Dämpferkäfig, oder dergleichen oder auch Gleichstrommaschinen wie Nebenschluss- oder Reihenschlussmaschinen oder dergleichen.

Um die bestimmungsgemäße Funktion des Läufers und/oder des Ständers realisieren zu können, ist es erforderlich, den Wicklungsleiter der Wicklung gegenüber dem Blechpaket elektrisch zu isolieren, weil in der Regel der Wicklungsleiter der Wicklung in der Nut des Blechpakets angeordnet ist. Bei einer rotierenden elektrischen Maschine ist der Wicklungsleiter üblicherweise im Wesentlichen axial zu einer Rotationsachse des Läufers angeordnet. Unterschiedliche Abschnitte des Wicklungsleiters sind aufgrund elektrodynamischer Eigenschaften mit einem unterschiedlichen elektrischen Potential beaufschlagt. Es ist deshalb erforderlich, den Wicklungsleiter gegenüber dem Blechpaket, welches ebenfalls zumindest teilweise eine elektrische Leitfähigkeit aufweist, elektrisch zu isolieren.

Darüber hinaus ist zu beachten, dass das Blechpaket in der Regel mit einem elektrischen Bezugspotential, häufig ein Erdpotential, elektrisch gekoppelt ist. Da häufig die Wicklung mit einer elektrischen Spannung beaufschlagt wird, die gegenüber dem Bezugspotential bzw. dem Erdpotential nicht galvanisch getrennt ist, ist bereits aus diesem Grund eine elektrische Isolation des Wicklungsleiters bzw. der gesamten Wicklung gegenüber dem Blechpaket erforderlich.

Der Aufwand für die elektrische Isolation ist abhängig von der elektrischen Spannung, mit der die Wicklung beaufschlagt wird. Sie ist beispielsweise für elektrische Maschinen, die für einen Niederspannungsbereich ausgebildet sind, kleiner als für elektrische Maschinen, die für Mittel- oder sogar Hochspannung ausgelegt sind. Gerade bei Hochspannungsmaschinen kommt der elektrischen Isolation eine besonders wichtige Aufgabe zu und erfordert besondere konstruktive Maßnahmen, um der elektrischen Sicherheit und der erforderlichen Zuverlässigkeit genügen zu können.

Im Stand der Technik ist es bekannt, Nuten von elektrischen Maschinen, die zur Aufnahme des Wicklungsleiters dienen, mit einem Isolationsmaterial auszulegen, um insbesondere den Erdschluss zwischen dem elektrischen Wicklungsleiter und dem Blechpaket, welches geerdet ist, oder auch Kurzschlüsse zwischen unterschiedlichen Phasen bei einer mehrphasigen elektrischen Maschine in einer Nut zu vermeiden. Derartiges kann beispielsweise bei einer Zweischichtwicklung auftreten. Je höher die Messungsspannung und eventuell zu erwartende transiente Spannungen sind, umso höher ist die Isolationsfähigkeit bzw. elektrische Durchschlagsfestigkeit des elektrischen Isolationsmaterials auszulegen.

Je höher der Aufwand bezüglich des elektrischen Isolationsmaterials ist, desto dicker ist das elektrische Isolationsmaterial in der Regel auszugestalten. Dadurch erhöht sich aber auch entsprechend auch ein Wärmeübergangswiderstand vom Wicklungsleiter zum Blechpaket. Die Wicklung ist deshalb, ebenso wie das elektrische Isolationsmaterial, einer entsprechend hohen Temperaturbeanspruchung ausgesetzt. Um die Leistungsfähigkeit der elektrischen Maschine durch den entsprechenden Isolationsaufwand nicht unnötig zu beschränken, ist häufig eine entsprechende Kühleinrichtung vorgesehen, um eine entsprechend ausreichende Effizienz der elektrischen Maschine erreichen zu können. Die Kühleinrichtung kann beispielsweise unter Nutzung von Gas, insbesondere Luft, Wasser oder dergleichen als Kühlmittel ausgebildet sein.

In der folgenden Tabelle 1 sind jeweilige spezifische elektrische Widerstände sowie Durchschlagsfestigkeiten unterschiedlicher Isolationsmaterialien angegeben.

**Tabelle 1:**

| Material | spezifischer Widerstand [Ω m] | Durchschlagsfestigkeit [kV/mm] |
|---|---|---|
| Aluminiumoxidkeramik | 10¹⁴ | >20 |
| | 10¹³ (bei 20°C) | |
| Steatit | 10⁷ (bei 6000°C) | 20 |
| Porzellan (je nach Art) | 10¹¹ | 20 |
| Glas (je nach Art) | 10¹⁰ - 10¹⁴ | 10-40 |
| Glasfaserverstärkte Kunststoffe (je nach Fertigung) | 10¹⁰ - 10¹⁴ | 20-40 |
| Epoxidharze (je nach Fertigung) | 10¹⁴ | >10 |

Die Isolation der Nut und/oder der Wicklung, insbesondere des Wicklungsleiters ist aus dem Stand der Technik bekannt.

Es ist üblich, im Stand der Technik bezüglich der elektrischen Isolierung der Wicklung zu unterscheiden, und zwar für Niederspannungsmaschinen und für Hochspannungsmaschinen.

Bei Niederspannungsmaschinen werden üblicherweise die folgenden drei Isolierungen vorgesehen:
- Hauptisolierung: Sie dient der elektrischen Isolierung der Wicklung gegenüber dem Blechpaket, insbesondere des Wicklungsleiters gegenüber einer Wand der Nut des Blechpakets. Das Blechpaket ist über beispielsweise ein Gehäuse mit dem Bezugspotential, insbesondere dem Erdpotential, elektrisch gekoppelt, wohingegen die Wicklung, insbesondere der Wicklungsleiter ein elektrisches Betriebspotential gegenüber dem Bezugspotential aufweist. In der Regel umfasst die Hauptisolierung eine Nutauskleidung umfassend einen Flächenisolierstoff.
- Phasenisolierung: Sie stellt eine elektrische Isolation zwischen einzelnen Phasen einer mehrphasigen Wicklung einer mehrphasigen elektrischen Maschine bereit. Die Phasenisolierung umfasst ebenfalls häufig einen Flächenisolierstoff.
- Windungsisolierung: Die Wicklung der elektrischen Maschine umfasst in der Regel mehrere Windungen des Wicklungsleiters, die zumindest teilweise bzw. abschnittsweise benachbart zueinander in der Nut angeordnet sind. Die Windungsisolierung dient dazu, dass ein kleinerer, aber sich zunehmend aufsummierender Potentialunterschied benachbarter Windungen hinreichend elektrisch isoliert werden kann. Die Windungsisolierung ist häufig mittels eines Lacks, insbesondere eines Drahtlacks und/oder eines Tränkharzlacks gebildet.

Bei Mittelspannungsmaschinen wird eine elektrische Isolation der Wicklung bzw. des Wicklungsleiters gegenüber dem Blechpaket gemäß einer Hochspannungsisolierung ausgerüstet. Dazu gehören unter anderem:
- eine Windungsisolierung, die für eine Hochspannung geeignet ausgelegt ist. Hierzu können Isolationsstoffe wie Kapton, Lack, Glas, aber auch Glimmer, Glasfasern, deren Dicke auf die jeweilige elektrische Spannungsbeaufschlagung abgestimmt ist, und/oder dergleichen eingesetzt werden.
- eine Nutisolation: Die Nutisolation kann beispielsweise als Hülse ausgebildet sein und hat neben der Aufgabe der Bereitstellung einer elektrischen Isolation die Aufgabe, ergänzend vor Feuchtigkeit und mechanischen Einwirkungen, beispielsweise aufgrund einer Montage oder dergleichen, zu schützen. Die Nutisolation kann beispielsweise Kapton, Nomex-Kapton oder dergleichen umfassen.

Als ergänzende Nutfüllung können beispielsweise Nomex-Streifen aus Filz oder Papier eingesetzt werden.

Bei Hochspannungsmaschinen wird ergänzend zu der Isolation bei Mittelspannungsmaschinen besonderer Wert darauf gelegt, dass eine gute elektrische Isolierung der Wicklung im Bereich eines Nuteingangs bzw. eines Nutausgangs vorhanden ist. Dabei ist darauf zu achten, dass ein Außenglimmschutz sowie auch ein Endenglimmschutz vorgesehen werden. Für den Außenglimmschutz können beispielsweise imprägnierte Polyesterfliese, ein elektrisch leitfähiges Band, ein Halbleiterband mit spezifischen Halbleitereigenschaften, ein Polyestergewebe oder dergleichen eingesetzt werden. Der Endenglimmschutz dient zur Vergleichmäßigung eines Potentialabbaus zur Vermeidung von Glimmentladungen.

Da im Betrieb einer elektrischen Maschine aufgrund von Verlusten Wärme entsteht, ist es wichtig zu wissen, wie gut diese Wärme aus der elektrischen Maschine abgeführt werden kann. Dabei kommt es unter anderem auf eine Wärmeleitfähigkeit an, welche in der nachfolgenden Tabelle 2 für einige Materialien aufgelistet ist.

**Tabelle 2:**

| Temperaturleitfähigkeit ausgewählter Metalle bei 20 °C | | | | |
|---|---|---|---|---|
| | Dichte (ρ) in 10³ kg*m⁻³ | spezifische Wärmekapazität (c) in kJ/(kg*K) | Wärmeleitfähigkeit (λ) in W/(m·K) | Temperaturleitfähigkeit (a) in 10⁻⁶ m²/s |
| Aluminium | 2,7 | 0,888 | 237 | 98,8 |
| Blei | 11,34 | 0,129 | 35 | 23,9 |
| Bronze | 8,8 | 0,377 | 62 | 18,7 |
| Chrom | 6, 92 | 0,44 | 91 | 29,9 |
| Cr-Ni-Stahl (X12CrNi18,8 ) | 7,8 | 0,5 | 15 | 3,8 |
| Eisen | 7,86 | 0,452 | 81 | 22,8 |
| Gold | 19,26 | 0,129 | 316 | 127,2 |
| Gusseisen | 7,8 | 0,54 | 42...50 | 10...12 |
| Stahl (<0,4%C) | 7,85 | 0,465 | 45...55 | 12...15 |
| Kupfer | 8,93 | 0,382 | 399 | 117 |
| Magnesium | 1,74 | 1,02 | 156 | 87,9 |
| Mangan | 7,42 | 0,473 | 21 | 6 |
| Molybdän | 10,2 | 0,251 | 138 | 53,9 |
| Natrium | 0,97 | 1,22 | 133 | 112 |
| Nickel | 8,85 | 0,448 | 91 | 23 |
| Platin | 21,37 | 0,133 | 71 | 25 |
| Silber | 10,5 | 0,235 | 427 | 173 |
| Titan | 4,5 | 0,522 | 22 | 9,4 |
| Wolfram | 19 | 0,134 | 173 | 67,9 |
| Zink | 7,1 | 0,387 | 121 | 44 |
| Zinn, weiß | 7,29 | 0,225 | 67 | 40,8 |
| Silicium | 2,33 | 0,700 | 148 | |
| Acrylglas (Plexiglas) | 1,18 | 1,44 | 0,184 | 0,108 |
| Asphalt | 2,12 | 0, 92 | 0,70 | 0,36 |
| Beton | 2,4 | 0,88 | 2,1 | 0, 994 |
| Eis (0 °C) | 0,917 | 2,04 | 2,25 | 1,203 |
| Erdreich (grobkiesig) | 2,04 | 1,84 | 0,52 | 0,14 |
| Sandboden (trocken) | 1,65 | 0,80 | 0,27 | 0,20 |
| Sandboden (feucht) | 1,75 | 1,00 | 0,58 | 0,33 |
| Tonboden | 1,45 | 0,88 | 1,28 | 1,00 |
| Fensterglas | 2,48 | 0,70 | 0,87 | 0,50 |
| Spiegelglas | 2,70 | 0,80 | 0,76 | 0,35 |
| Quarzglas | 2,21 | 0,73 | 1,40 | 0,87 |
| Glaswolle | 0,12 | 0, 66 | 0,046 | 0,58 |
| Gips | 2,2 bis 2,4 | 1,09 | 0,51 | 0,203 |
| Granit | 2,75 | 0,89 | 2,9 | 1,18 |
| Kohlenstoff (Graphit) | 2,25 | 0,709 | 119...165 | 74...103 |
| Korkplatten | 0,19 | 1,88 | 0,041 | 0,115 |
| Marmor | 2,6 | 0,80 | 2,8 | 1, 35 |
| Mörtel | 9 | 0,80 | 0, 93 | 0, 61 |
| Papier | 0,7 | 1,20 | 0,12 | 0,14 |
| Polyethylen | 0,92 | 2,30 | 0,35 | 0,17 |
| Polytetrafluor ethylen | 2,20 | 1,04 | 0,23 | 0,10 |
| Polyvinylchlorid | 1,38 | 0, 96 | 0,15 | 0,11 |
| Porzellan (95 °C) | 2,40 | 1,08 | 1,03 | 0,40 |
| Schwefel | 1,96 | 0,71 | 0,269 | 0,193 |
| Steinkohle | 1,35 | 1,26 | 0,26 | 0,15 |
| Tannenholz (radial) | 0,415 | 2,72 | 0,14 | 0,12 |
| Verputz | 1,69 | 0,80 | 0,79 | 0,58 |
| Ziegelstein | 1, 6...1, 8 | 0,84 | 0, 38...0, 52 | 0, 28...0, 34 |
| Luft | 0,0013 | 1,01 | 0,026 | 20 |
| Wasser | 1,0 | 4,18 | 0,6 | 0,14 |

Um den Betrieb der elektrischen Maschine möglichst effizient zu gestalten, wird für den Wicklungsleiter der Wicklung ein Werkstoff eingesetzt, der eine möglichst hohe elektrische Leitfähigkeit aufweist. In der folgenden Tabelle 3 sind für einige Werkstoffe spezifische elektrische Widerstandswerte angegeben.

**Tabelle 3:**

| Leiter | ρ | | Lösungen | | ρ / |
|---|---|---|---|---|---|
| | Ω·mm²/m | | | | Ω·cm |
| Silber | 0,016 | | Salzsäure | | 1,59 |
| Kupfer | 0,0178 | | Schwefelsäure | | 2,55 |
| Gold | 0,023 | | Kalilauge | | 3, 14 |
| Aluminium | 0,03 | | Natronlauge | | 3,205 |
| Kohlenstoff | 33,33 | | Ammoniumchlorid | | 5, 62 |
| Germanium | 1000 | | Natriumchlorid | | 8,33 |
| Silizium | 1000 | | Zinkchlorid | | 13,79 |
| | | | | | |

| Isolatoren | ρ | Erdreich | | p | |
|---|---|---|---|---|---|
| | Ω·cm | | | Ω·m | |
| Pertinax | 109 | Moordboden | | 30 | |
| Glas | 1013 | Ackerboden | | 100 | |
| weich PVC | 1013 | feuchter Sand | | 200 | |
| Porzellan | 1015 | trockener Sand | | 1000 | |
| Glimmer | 1016 | lockeres Gestein | | 3000 | |
| Kautschuk | 1016 | | | | |
| Polystyrol | 1018 | | | | |

Auch wenn sich die bisherigen Techniken der elektrischen Isolation von elektrischen Maschinen im Stand der Technik bewährt haben, so besteht dennoch weiterer Verbesserungsbedarf. Gerade bei Mittel- und Hochspannungsmaschinen erweist sich der Aufwand für die elektrische Isolation insofern als nachteilig, weil er die thermischen Eigenschaften der elektrischen Maschine ungünstig beeinflusst. Dies resultiert unter anderem aus dem hohen Aufwand, der zur Bereitstellung einer entsprechenden, hohen elektrischen Isolation erforderlich ist. Das jeweilige elektrische Isolationsmaterial ist mit einer entsprechenden Dicke bzw. Stärke zu wählen. Da die üblicherweise eingesetzten Isolationsmaterialien einen vergleichsweise hohen thermischen Widerstand aufweisen, stehen sie einer effizienten Wärmeabführung entgegen.

Dem Grunde nach gilt dies ebenfalls für das Blechpaket. Bekanntermaßen sind die einzelnen Bleche des Blechpakets gegenüber einander elektrisch isoliert angeordnet, damit sich im Blechpaket möglichst keine relevanten Wirbelströme ausbilden können, die zu entsprechenden Verlusten im bestimmungsgemäßen Betrieb der elektrischen Maschine führen. Auch hier besteht entsprechender Verbesserungsbedarf.

Der Erfindung liegt somit die Aufgabe zugrunde, eine verbesserte elektrische Isolation für eine elektrische Maschine bereitzustellen.

Als Lösung wird mit der Erfindung eine elektrische Maschine gemäß dem unabhängigen Anspruch 1 vorgeschlagen.

Vorteilhafte Weiterbildungen ergeben sich anhand von Merkmalen der abhängigen Ansprüche.

Bezüglich einer gattungsgemäßen elektrischen Maschine wird insbesondere vorgeschlagen, dass das erste und/oder das zweite elektrische Isolationsmaterial zumindest teilweise durch ein Hybridfunktionsmaterial gebildet ist.

Das Hybridfunktionsmaterial ersetzt gemäß der Erfindung zumindest teilweise das erste Isolationsmaterial, welches dazu dient, den Wicklungsleiter gegenüber der Nut elektrisch zu isolieren. Darüber hinaus kann das Hybridfunktionsmaterial ebenso dafür eingesetzt werden, benachbart angeordnete Bleche des Blechpakets elektrisch gegeneinander zu isolieren. Das Hybridfunktionsmaterial weist eine hierfür geeignete ausreichende elektrische Isolation auf und ermöglicht darüber hinaus einen guten Wärmeübergang vom in der Nut angeordneten Wicklungsleiter in das Blechpaket, insbesondere wenn eine hohe Wärmeleitfähigkeit von einem Faktor 2,5 gegenüber Kupfer und etwa 30 gegenüber einer Aluminiumoxidkeramik bereitgestellt wird. Das Hybridfunktionsmaterial kann zum Beispiel ein Material Black-X der Firma Litecool sein. Die Firma Litecool hat beispielsweise folgendes zu diesem Material auf ihrer Website http://www.litecool.co.uk unter http://www.litecool.co.uk/news/19-litecool-trials-new-dielectric-material-black-x.html, veröffentlicht am 01.08.2016, ausgeführt (deutsche Übersetzung):
Neuigkeiten
Litecool verfolgt ein neues dielektrisches Material - Black X™
   Veröffentlich: Donnerstag, 02 July 2015 07:31 | | *3 fach höhere thermische Leitfähigkeit als Kupfer hält LED Gehäuse viel Kühler*
Sheffield, UK, Juli 2015 - Litecool, hat LED Gehäuse hergestellt, die ein neues dielektrisches Material verwenden, dass eine thermische Leitfähigkeit von 1000 W/mK hat - 3 mal höher als Kupfer und 30 mal besser als Aluminiumkeramik.
   Dielektrika werden genutzt, um innerhalb von LED Gehäusen elektrische Leitungen zu isolieren, jedoch behindern sie den thermischen Weg, wodurch ein Überhitzen der LED verursacht wird. Mittelleistungs-Low-Cost-LED-Gehäuse verwenden Plastik als wesentliches dielektrisches Material. Hochleistungs-High-Cost-LED-Gehäuse verwenden Keramik wie zum Beispiel Aluminiumoxid als Dielektrikum. Dieses neue Material, Black X™, hat eine thermische Leitfähigkeit 30 mal höher als Aluminiumoxid.
Litecool hat erfolgreich LED Gehäuse aus Black X™ als das Dielektrikum aufgebaut und getested. Die LED Gehäuse haben einen thermischen Widerstand von zwischen 0,2 °C/W und 0,5 °C/W abhängig von der Konstruktion. Dies ist bis zu 6 mal niedriger als der nächste Wettbewerber, was bedeutet, dass die LED mit einem 6 mal größeren Strom ohne Überhitzen beaufschlagt werden kann.
"Es ist ein unglaubliches Material. Wir haben immer angenommen, dass dielektrische Materialien die thermische Performance unserer LED Gehäuse behindern, aber dieses Material verbessert sie aktuell. Die thermischen Widerstände der LED Gehäuse, die wir erreicht haben, sind so klein, dass wir Probleme hatten, sie zu messen. Wir mussten 9 High-Power-LED's in einem Gehäuse nutzen, um eine genügende Leistungsdicht zu erzeugen, um irgendeinen Unterschied in der Temperatur erfassen zu können." Robert Corbin, Projektingenieur, Litecool "Dies ist ien Änderungsschritt in der Performance eines LED Gehäuses. Wir werden in der Lage sein, neue Lumen-Dichte-Grenzen ohne die Notwendigkeit von teuren Wärmesenken, HeatPipes oder Ventilatoren zu erreichen. Wir sehen dieses Material zunächst bei Spot-Light-Anwendungen für Pin-Point-Lichtquellen angewendet, aber wir beabsichtigen auch, es in unseren Lumen-Block für den weiten LED-Leuchten-Mark einfließen zu lassen." James Reeves, CEO, Litecool.

Dieses Material ist bei dem vorgenannten Hersteller für Leuchtdioden im Einsatz und wird dort mit den vorgenannten Eigenschaften beworben. Aus diesen Eigenschaften ergeben sich weitere Anwendungsfelder für das Material Black-X.

Das Hybridfunktionsmaterial Black-X der Firma Litecool wurde auch auf der Seite http://www.elektroniknet.de/optoelektronik/ledlighting/artike 1/121282/ (vom 01.08.2016) in einem Artikel von Ralf Higgelke wie folgt beschrieben:
Litecool
   Neues Dielektrikum lässt LEDs kalt
   Litecool hat ein LED-Package vorgestellt, das mit »Black X« ein neuartiges dielektrisches Material verwendet. Mit 1000 W/(m·K) ist seine Wärmeleitfähigkeit etwa 3-mal höher als die von Kupfer und sogar 30-mal besser als die von keramischem Aluminiumoxid. Dielektrika in LED-Gehäusen isolieren die Leiterbahnen, behindern aber den thermischen Pfad, was die LED thermisch limitiert. Litecool [1] hat nun einen Prototyp eines LED-Gehäuses mit »Black X« als Dielektrikum getestet. Die Packages haben je nach Konstruktion einen thermischen Widerstand von 0,2 K/W bis 0,5 K/W. Dies sei laut Hersteller bis zu 6-mal niedriger ist beim nächstgelegene Mitbewerber; das bedeutet auch, dass die LED 6-mal mehr Strom führen kann, ohne dabei zu überhitzen.
»Die thermischen Widerstände der LED-Gehäuse mit Black X sind so niedrig, dass wir Probleme hatten, diese zu messen«, so Robert Corbin, Projektingenieur bei Litecool. »Wir mussten neun Hochleistungs-LEDs in einem Gehäuse zusammenschalten, um genügend Leistungsdichte zu haben, um einen Temperaturunterschied aufzuzeichnen.
»Black X wird uns in der Lage versetzen, neue Leuchtdichten zu erreichen, ohne auf teure Kühlkörper, Heatpipes oder Ventilatoren angewiesen zu sein«, glaubt James Reeves, CEO von Litecool. »Wir gehen davon aus, dass dieses Material zunächst in Punktlicht-Anwendungen zum Einsatz kommen wird, aber wir haben auch die Absicht, es in unsere Lumen-Block für den breiteren Beleuchtungsmarkt zu integrieren.

In einer Ausgestaltung der elektrischen Maschine weist das Hybridfunktionsmaterial zumindest eine der obig dem Material Black X zugewiesenen Eigenschaften auf.

In einer Ausgestaltung der elektrischen Maschine weist das Hybridfunktionsmaterial eine Wärmeleitfähigkeit größer als Kupfer auf. Die Wärmeleitfähigkeit ist insbesondere etwa 3-mal größer als von Kupfer. Die Wärmeleitfähigkeit ist beispielsweise 30-mal besser als die von keramischem Aluminiumoxid. Zudem ist das Hybridfunktionsmaterial insbesondere ein Dielektrikum.

In einer Ausgestaltung der elektrischen Maschine weist das Hybridfunktionsmaterial eine Wärmeleitfähigkeit größer als Kupfer auf und einen spezifischen Widerstand gleich oder größer einem Hartpapier wie Pertinax. Pertinax ist eine Marke und ein Beispiel für ein Hartpapier. Hartpapier ist ein Faserverbundwerkstoff aus Papier und einem Phenol-Formaldehyd-Kunstharz (Phenoplast). Hartpapier wird in der Elektrotechnik und in der Elektronik als Isolierstoff verwendet.

In einer Ausgestaltung der elektrischen Maschine weist das Hybridfunktionsmaterial eine im Vergleich zu Kupfer zumindest doppelt so große Wärmeleitfähigkeit auf und eine elektrische Isolationsfähigkeit gleich oder besser als Steatit bzw. Aluminiumoxid.

Durch die verbesserte thermische Leitfähigkeit und die zugleich gute elektrische Isolationsfähigkeit des Hybridfunktionsmaterials kann insbesondere die Temperaturbeanspruchung der elektrischen Maschine reduziert werden, und es können beispielsweise eine dünnere Isolierschicht in der Nut und damit zum Beispiel auch ein höherer Füllfaktor für die Wicklung bzw. den Wicklungsleiter in der Nut erreicht werden. Dadurch kann der Wirkungsgrad der gesamten elektrischen Maschine bei gleichem Bauraum verbessert werden.

Durch das Hybridfunktionsmaterial kann sowohl eine Teilleiterisolation als auch eine Hauptleiterisolation des Wicklungsleiters erreicht werden. Als Füllstoff in der Nut kann das Hybridfunktionsmaterial ferner auch eine Vergleichmäßigung einer Wärmebelastung ermöglichen, so dass beispielsweise Hotspots reduziert werden können, so dass die Lebensdauer der elektrischen Maschine verlängert werden kann.

Vorzugsweise ist das Hybridfunktionsmaterial thermisch mit einer Wärmesenke gekoppelt. Dadurch kann das Hybridfunktionsmaterial zugleich der Entwärmung der elektrischen Maschine dienen und die im bestimmungsgemäßen Betrieb freigesetzte Wärme besser aus der elektrischen Maschine abführen. Zu diesem Zweck kann vorgesehen sein, dass das Hybridfunktionsmaterial mit einer entsprechenden Wärmesenke derart gekoppelt ist, dass zum Beispiel ein Materialüberstand in ein entsprechendes Kühlfluid hineinragt, so dass durch das umströmende Kühlfluid eine entsprechende Wärmeabfuhr ermöglicht wird. Darüber hinaus kann natürlich auch ein Kühlkörper oder dergleichen angeschlossen sein, der seinerseits mit einer Wärmesenke thermisch gekoppelt ist.

Ferner wird vorgeschlagen, dass die Nut mittels des Hybridfunktionsmaterials verschlossen ist. Dies berücksichtigt, dass gerade bei Mittel- bzw. Hochspannungsmaschinen die Nuten in der Regel mittels eines Materials verschlossen werden, damit der Wicklungsleiter in der Nut hinreichend fixiert angeordnet ist. Durch die Nutzung des Hybridfunktionsmaterials als Nutverschluss kann die Wärmeabfuhr weiter verbessert werden. Das Hybridfunktionsmaterial weist eine entsprechende Eigenschaft hinsichtlich der Stabilität auf, so dass die Nut zuverlässig für den bestimmungsgemäßen Betrieb verschlossen werden kann.

Ferner wird vorgeschlagen, dass in der Nut wenigstens zwei Wicklungsleiter der Wicklung angeordnet sind, wobei das Hybridfunktionsmaterial zwischen den Wicklungsleitern angeordnet ist. Diese Ausgestaltung bezieht sich darauf, dass in der Nut nicht nur ein einziger Wicklungsleiter angeordnet zu sein braucht, sondern auch mehrere Wicklungsleiter angeordnet sein können. Diese sind in der Regel benachbart zueinander angeordnet. Die Wicklungsleiter können der gleichen Wicklung angehören. Es kann insbesondere bei mehrphasigen elektrischen Maschinen vorgesehen sein, dass die Wicklungsleiter zu unterschiedlichen Wicklungen gehören, die jeweiligen Phasen zugeordnet sind. Dadurch können zwischen den Wicklungsleitern elektrische Spannungen entstehen, die mittels einer geeigneten elektrischen Isolation behandelt werden. Auch hier erweist sich der Einsatz des Hybridfunktionsmaterials als besonders vorteilhaft, weil neben einer guten elektrischen Isolation zugleich auch eine gute thermische Leitfähigkeit bereitgestellt werden kann. Die Belastbarkeit der elektrischen Maschine kann dadurch weiter verbessert werden.

Besonders vorteilhaft erweist es sich, wenn in einem Bereich eines Wicklungskopfes der Wicklung das Hybridfunktionsmaterial als Glimmschutz am Wicklungsleiter angeordnet ist. Das Hybridfunktionsmaterial ermöglicht es dadurch, nicht nur Glimmerscheinungen zuverlässig zu reduzieren, sondern es erlaubt darüber hinaus zugleich eine gute Wärmeabführung. Dies ist insbesondere für Hochspannungsmaschinen von Vorteil, weil dadurch der Aufwand für die elektrische Isolation und die elektrische Sicherheit weiter verbessert werden kann bzw. die Konstruktion entsprechend vereinfacht werden kann.

Gemäß einer vorteilhaften Weiterbildung wird vorgeschlagen, dass das Blechpaket wenigstens einen sich in radialer Richtung erstreckenden Wärmekanal aufweist, in dem das Hybridfunktionsmaterial angeordnet ist. Dabei nutzt diese Weiterbildung die Erkenntnis, dass die Wärmeleitung des Hybridfunktionsmaterials gegenüber dem Blechpaket deutlich größer ist. Infolgedessen kann mittels des Hybridfunktionsmaterials im Wärmekanal eine verbesserte Wärmeableitung aus der Maschine heraus erreicht werden, so dass eine höhere Belastbarkeit der elektrischen Maschine erreicht werden kann. Besonders vorteilhaft ist das Hybridfunktionsmaterial dann in entsprechend geeigneter Weise an einem radialen Ende des Blechpakets an die Wärmesenke thermisch gekoppelt.

Darüber hinaus wird vorgeschlagen, dass anstelle von wenigstens einem der magnetisierbaren Bleche des Blechpakets eine Scheibe aus dem Hybridfunktionsmaterial angeordnet ist, die hinsichtlich geometrischer Abmessungen vorzugsweise entsprechend dem jeweiligen Blech ausgebildet ist. Dadurch kann ein jeweiliges Blech durch eine entsprechend ausgebildete Scheibe aus dem Hybridfunktionsmaterial ersetzt werden. So ist es möglich, dass in vorgebbaren Abständen einzelne Bleche des Blechpakets durch das Hybridfunktionsmaterial ersetzt werden, wodurch eine verbesserte Kühlung im Bereich des Blechpakets erreicht werden kann. Dadurch, dass die Kühlung des Blechpakets insgesamt verbessert werden kann, kann das Blechpaket entsprechend höher beansprucht werden. Dadurch ergeben sich konstruktive Vorteile hinsichtlich der Auslegung der elektrischen Maschine.

Weitere Merkmale und Vorteile sind der folgenden Beschreibung von Ausführungsbeispielen anhand der beigefügten Figuren zu entnehmen. In den Figuren bezeichnen gleiche Bezugszeichen gleiche Merkmale und Funktionen. Es zeigen:
- FIG 1: in einer schematischen Schnittdarstellung eine rotierende elektrische Maschine gemäß der Erfindung,
- FIG 2: einen Ausschnitt aus einer schematischen Schnittansicht durch das Blechpaket im Bereich einer Nut,
- FIG 3: eine schematische Schnittansicht wie in FIG 2, bei der in der Nut mehrere Wicklungsleiter angeordnet sind und
- FIG 4: einen Ausschnitt einer schematisch-perspektivischen Darstellung im Bereich eines Wicklungskopfes der rotierenden elektrischen Maschine.

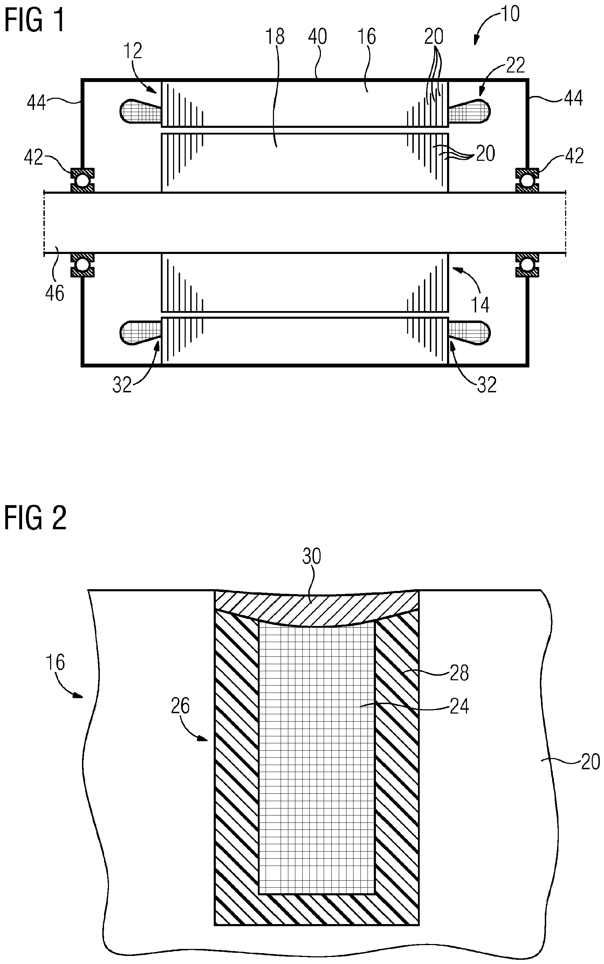

FIG 1 zeigt in einer schematischen Schnittdarstellung eine rotierende elektrische Maschine 10, die vorliegend als Hochspannungsmaschine ausgebildet ist, die einen Ständer 12 aufweist, der in einem Gehäuse 40 der rotierenden elektrischen Maschine 10 drehfest angeordnet ist. Zu diesem Zweck ist das Gehäuse 40 in üblicher Weise bautechnisch mit einem Fundament verbunden, so dass das Gehäuse 40 dadurch fixiert ist.

Der Ständer 12 weist eine im Wesentlichen kreisförmige Durchgangsöffnung auf, in der ein Läufer 14 drehbar gelagert angeordnet ist. Zu diesem Zweck sind an Stirnseiten des Ständers 12 gehäuseseitig Lagerschilde 44 vorgesehen, die Wälzlager 42 aufweisen, mit denen eine Läuferwelle 46 des Läufers 14 drehbar gelagert ist.

Sowohl der Ständer 12 als auch der Läufer 14 weisen jeweils ein Blechpaket 16, 18 auf. Die Blechpakete 16, 18 sind jeweils aus einem Stapel von mittels eines ersten elektrischen Isolationsmaterials gegenüber einander elektrisch isolierten, magnetisierbaren Blechen 20 gebildet. Das erste elektrische Isolationsmaterial ist vorliegend durch einen Isolationslack gebildet. Dadurch wird erreicht, dass im bestimmungsgemäßen Betrieb der rotierenden elektrischen Maschine 10 im Blechpaket 16, 18 im Wesentlichen eine Ausbildung von Wirbelströmen unterdrückt werden kann. Die Durchgangsöffnung des Ständers 12 ist hinsichtlich ihrer axialen Erstreckung im Wesentlichen quer zur ebenen Erstreckung der Bleche 20 der Blechpakete 16, 18 ausgebildet.

Der Ständer 12 weist eine Wicklung 22 auf, bei der in einer ersten Ausgestaltung, wie in FIG 2 dargestellt, in einer Nut 26 des Blechpakets 16 ein Wicklungsleiter 24 mittels eines zweiten elektrischen Isolationsmaterials 28 gegenüber dem Blechpaket 16 elektrisch isoliert angeordnet ist. Eine Wicklung des Läufers 14 ist in den FIG vorliegend nicht dargestellt. Jedoch gelten die Ausführungen für die Wicklung 22 dem Grunde nach ebenso für eine Läuferwicklung.

In FIG 2 ist ein Ausschnitt einer Schnittdarstellung durch das Blechpaket 16 vergrößert dargestellt, und zwar im Bereich der Nut 26 und quer zur axialen Erstreckung der Durchgangsöffnung. Die Nut 26 ragt von einer öffnungsseitigen Oberfläche des Blechpakets 16 radial nach außen in das Blechpaket 16. Die Bleche 20 des Blechpakets 16 weisen entsprechende Ausschnitte bzw. Ausnehmungen auf, um die Nut 26 zu bilden. In der Nut 26 ist ein zweites elektrisches Isolationsmaterial 28 angeordnet, welches den in der Nut 26 angeordneten Wicklungsleiter 24, der vorliegend durch einen rechteckigen Kupferstab gebildet ist, bezüglich der Bleche 20 des Blechpakets 16 umschließt, um dadurch eine Hauptisolierung bereitzustellen. Öffnungsseitig ist ein Nutverschlusskeil 30 vorgesehen, mittels dem die Nut verschlossen ist. In der vorliegenden Ausgestaltung ist das zweite elektrische Isolationsmaterial sowie auch der Nutverschlusskeil aus einem Hybridfunktionsmaterial gebildet, welches vorliegend durch das Material Black-X der Firma Litecool oder ein dazu vergleichbares Hybridfunktionsmaterial gebildet ist.

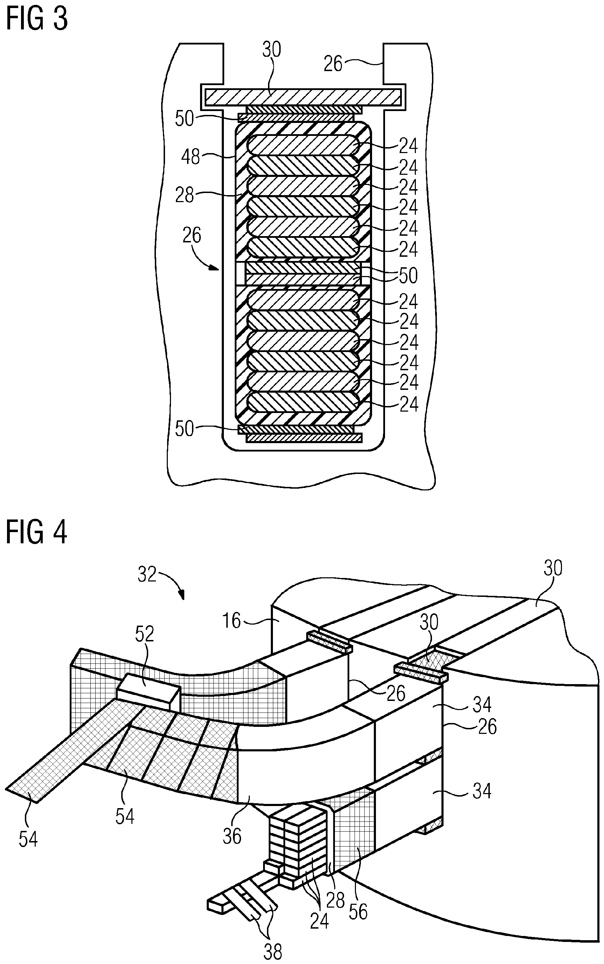

FIG 3 zeigt eine zweite Ausgestaltung für eine Wicklung 22, die vorliegend eine Mehrzahl von Wicklungsleitern 24 umfasst. In dieser Ausgestaltung sind in der Nut 26 zwei Stapel von jeweils sechs Wicklungsleitern 24 übereinander, d.h., in radialer Richtung gestapelt, in der Nut 26 angeordnet. Die Nut 26 umfasst eine Nutisolierungshülse 48, in der der Stapel von Wicklungsleitern 24 von dem zweiten Isolationsmaterial 28 umgeben angeordnet ist. Das zweite Isolationsmaterial 28 ist hier ebenso wie in dem vorhergehenden Ausführungsbeispiel zur FIG 2 ausgebildet.

Die beiden übereinander angeordneten Wicklungspakete der Wicklungsleiter 24 sind mittels eines Nutfüllstoffs 50 voneinander getrennt. Der Nutfüllstoff 50 ist ebenso an einer Nutbodenseite sowie an einer Nutöffnungsseite vorgesehen. Die Nut 26 ist sodann - wie bei der Ausgestaltung gemäß FIG 2 - mit dem Nutverschlusskeil 30 verschlossen. Sowohl der Nutverschlusskeil 30 als auch der Nutfüllstoff 50 sowie auch die Nutisolierungshülse 48 können in der vorliegenden Ausgestaltung aus dem Hybridfunktionsmaterial gebildet sein.

Bezüglich der Wicklungsleiter 24 wird ergänzend angemerkt, dass diese eine jeweilige Isolationsschicht aufweisen, um die einzelnen Wicklungsleiter 24 gegenüber benachbart angeordneten Wicklungsleitern 24 elektrisch isolieren zu können. Diese Isolierung, auch Kupferisolation genannt, kann ebenfalls durch das Hybridfunktionsmaterial gebildet sein.

FIG 4 zeigt in einer schematisch-perspektivischen Ausschnittsdarstellung einen Wicklungskopf 32 der Wicklung 22 der rotierenden elektrischen Maschine 10 gemäß FIG 3. Zu erkennen ist ein stirnseitiges Ende des Blechpakets 16, aus dem die Wicklung 22, die in den Nuten 26 angeordnet ist, stirnseitig herausragt. Zu erkennen ist ferner, dass die gestapelten Wicklungsleiter 24 eine eigene Teilleiterisolierung 38 aus einem Teilisolationsmaterial aufweisen, mittels der die einzelnen Wicklungsleiter 24 gegenüber benachbart angeordneten Wicklungsleitern 24 elektrisch isoliert angeordnet werden können. Die Teilleiterisolierung 38 kann ebenfalls durch das Hybridfunktionsmaterial gebildet sein.

Der Stapel aus Wicklungsleitern 24 ist von dem zweiten Isolationsmaterial, welches durch das Hybridfunktionsmaterial 28 gebildet ist, umgeben. In der vorliegenden Ausgestaltung ist ferner ein Deckband 56 vorgesehen, was den jeweiligen Stapel von Wicklungsleitern 24 ergänzend umgibt. Bei Nutzung des Hybridfunktionsmaterials kann das Deckband 56 gegebenenfalls auch entfallen. Abschließend ist stirnseitig über das Blechpaket 16 hinausragend ein Außenglimmschutz 34 angeordnet, der den jeweiligen Stapel aus Wicklungsleitern 24 ergänzend umgibt. Der Außenglimmschutz 34 kann ebenfalls aus dem Hybridfunktionsmaterial gebildet sein.

Schließlich kann ergänzend noch ein Endenglimmschutz 36 vorgesehen sein, der ebenfalls aus dem Hybridfunktionsmaterial 28 gebildet sein kann. Dieser kann ergänzend zu einem Glimmerband 54 vorgesehen sein, welches den entsprechenden Stapel aus Wicklungsleitern 24 ergänzend umgibt.

Ergänzend ist zwischen den aus dem Blechpaket 16 herausragenden Paketen von Wicklungsleitern 24 ein Abstandselement 52 vorgesehen, welches der Versteifung des Wicklungskopfes 32 und der Distanzierung der Stapel der Wicklungsleiter 24 außerhalb der Nut 26 dient.

Das Hybridfunktionsmaterial 28, welches vorliegend beispielsweise durch das Material Black-X gebildet ist, weist folgende Eigenschaften auf:
- eine im Vergleich zu Kupfer zumindest doppelt so große Wärmeleitfähigkeit und
- eine elektrische Isolationsfähigkeit gleich oder besser als Steatit oder Aluminiumoxid.

Des Weiteren kann vorgesehen sein, dass das Blechpaket 16, 18 im Wesentlichen vorzugsweise radial ausgebildete Wärmekanäle aufweist, die mit dem Hybridfunktionsmaterial gefüllt sind. Dies kann abschnittsweise über mehrere Bleche 20 des jeweiligen Blechpakets 16, 18 erfolgen, welche an diesen Stellen dann eine entsprechende Ausnehmung aufweisen. Somit sind radial nach außen gerichtete Wärmekanäle realisierbar, welche beispielsweise einen runden, einen ovalen, einen eckigen oder dergleichen Querschnitt aufweisen können. Es können mehrere Wärmekanäle vorgesehen sein, die vorzugsweise in Umfangsrichtung und/oder in eine axiale Längsrichtung gleich verteilt sein können. Die Wärmekanäle können aus dem jeweiligen Blechpaket 16, 18 austreten und beispielsweise in einen Kühlkanal für ein Kühlmedium, beispielsweise Luft, Wasser oder dergleichen, münden. Durch die Ausbildung von Kühlkanälen, welche im vorliegenden Fall aus vollem Material sind, kann es zu einer magnetischen Schwächung des Jochs kommen, welche aber durch dessen Verdickung im umgebenden Bereich ausgeglichen werden kann.

Auch bei den Blechen 20 kann die elektrische Isolation, die bislang häufig durch einen Backlack bereitgestellt wird, durch das Hybridfunktionsmaterial 28 ersetzt oder zumindest ergänzt sein. Dadurch kann ein verbesserter Wärmetransport, insbesondere zwischen den Blechen, vorzugsweise nach außen zu einer entsprechend ausgebildeten Kühleinrichtung wie Kühlrippen oder dergleichen, erfolgen.

In den vorher diskutierten Ausführungsbeispielen ist als Wicklungsleiter 24 ein Bandleiter vorgesehen. Alternativ können natürlich auch andere Formen für Querschnitte des Wicklungsleiters 24 vorgesehen sein, beispielsweise Rundleiter oder dergleichen. Wie bereits zuvor ausgeführt, kann ein jeweiliger Wicklungsleiter 24 einen Kunststoffmantel zur elektrischen Isolierung aufweisen. Dieser kann ebenfalls durch das Hybridfunktionsmaterial gebildet sein. Dadurch kann die Gefahr eines Hitzestaus in der Nut 26 reduziert werden, da durch die günstigen Eigenschaften des Hybridfunktionsmaterials Verlustwärme leichter durch die Vielzahl der Kontakte der unterschiedlichen Isolierungen leichter an das Blechpaket 16, 18 und/oder an entsprechende Wärmeleitkanäle abgegeben werden kann.

Das Hybridfunktionsmaterial kann auf konventionelle Art und Weise in die Nuten bzw. in die elektrische Maschine 10 eingebracht werden. Darüber hinaus besteht natürlich ebenso die Möglichkeit, generative Fertigungsverfahren, insbesondere additive Fertigungsverfahren hierzu zu nutzen.

Mit der Erfindung können die folgenden Vorteile erreicht werden:
Die Kühlung der rotierenden elektrischen Maschine 10 kann insgesamt verbessert werden. Dies erweist sich als vorteilhaft bei gekapselten Maschinen im Mining-Geschäft, beispielsweise Bergbau, bei Trucks oder dergleichen, explosionsgeschützten Maschinen, Spindelantrieben in der Werkzeugtechnik und/oder dergleichen. Vor allen für kompakte leistungsfähige Antriebe in der Verkehrstechnik, beispielsweise bei Schiffsantrieben, insbesondere bei U-Booten, im Bereich der Traktionstechnik (Lokomotiven, Triebzüge, Straßenbahnen als auch e-cars) sowie im Bereich bei e-Aircraft, ist die Erfindung besonders geeignet.

Die vorgenannten Ausführungsbeispiele dienen lediglich der Erläuterung der Erfindung und sollen diese nicht beschränken.

## Patentansprüche

1. Elektrische Maschine (10) mit:
- einem Ständer (12), und
- und einem Läufer (14),
- wobei der Ständer (12) und/oder der Läufer (14) ein Blechpaket (16,18) aus einem Stapel von mittels eines ersten elektrischen Isolationsmaterials gegenüber einander elektrisch isolierten, magnetisierbaren Blechen (20) und eine Wicklung (22) mit wenigstens einem Wicklungsleiter (24) aufweist, der in wenigstens einer Nut (26) des Blechpakets (16, 18) mittels eines zweiten elektrischen Isolationsmaterials (28) gegenüber dem Blechpaket (16,18) elektrisch isoliert angeordnet ist, **dadurch gekennzeich**n e t , dass das erste und/oder das zweite elektrische Isolationsmaterial (28) zumindest teilweise durch ein Hybridfunktionsmaterial gebildet ist.

2. Elektrische Maschine nach Anspruch 1, **dadurch gekennzeichnet, dass** das Hybridfunktionsmaterial (28) eine im Vergleich zu Kupfer zumindest größere Wärmeleitfähigkeit aufweist und insbesondere ein Dielektrikum ist, wobei das Dielektrikum insbesondere eine elektrische Isolationsfähigkeit gleich oder besser als Steatit bzw. Aluminiumoxid aufweist.

3. Elektrische Maschine nach Anspruch 1 oder 2, **dadurch gekennzeichnet, dass** das Hybridfunktionsmaterial (28) thermisch mit einer Wärmesenke gekoppelt ist.

4. Elektrische Maschine nach einem der vorhergehenden Ansprüche, **dadurch gekennzeichnet, dass** die Nut (26) mittels des Hybridfunktionsmaterials (30) verschlossen ist.

5. Elektrische Maschine nach einem der vorhergehenden Ansprüche, **dadurch gekennzeichnet, dass** in der Nut (26) wenigstens zwei Wicklungsleiter (24) der Wicklung (22) angeordnet sind, wobei das Hybridfunktionsmaterial (38) zwischen den Wicklungsleitern (24) angeordnet ist.

6. Elektrische Maschine nach einem der vorhergehenden Ansprüche, **dadurch gekennzeichnet, dass** in einem Bereich eines Wicklungskopfes (32) der Wicklung (22) das Hybridfunktionsmaterial (34,36) als Glimmschutz am Wicklungsleiter (24) angeordnet ist.

7. Elektrische Maschine nach einem der vorhergehenden Ansprüche, **dadurch gekennzeichnet, dass** das Blechpaket (16,18) wenigstens einen sich in radialer Richtung erstreckenden Wärmekanal aufweist, in dem das Hybridfunktionsmaterial angeordnet ist.

8. Elektrische Maschine nach einem der vorhergehenden Ansprüche, **dadurch gekennzeichnet , dass** anstelle von wenigstens einem der magnetisierbaren Bleche (20) des Blechpakets (16,18) eine Scheibe aus dem Hybridfunktionsmaterial angeordnet ist, die hinsichtlich geometrischer Abmessungen vorzugsweise entsprechend dem jeweiligen Blech (20) ausgebildet ist.
